# EUROPEAN PATENT APPLICATION

(11) **EP 1 330 958 A1**
(43) Date of publication of application: **30.07.2003**
(21) Application number: 03394007.3
(22) Date of filing: 16.01.2003
(51) Int. Cl.: A23L 1/315, A23B 4/06

(54) **A method for preparing a poultry product**

(30) Priority: 25.01.2002 IE 20020047
(71) Applicant: Cahill, David, Howth, County Dublin (IE)
(72) Inventor: Cahill, David, Baily, Howth, County Dublin (IE); Cahill, Evanne, Baily, Howth, County Dublin (IE)
(74) Representative: O'Brien, John Augustine

(57) **Abstract**

Frozen blocks of poultry meat are pre-tempered to bring the temperature of the blocks up to -12°C to -14°C. The pre-tempered blocks are then tempered for a minimum period of 24 hours to a temperature of from -8°C to -10°C. After tempering, a tempered block is pre-broken by rough mincing and the broken pieces are mixed with water and protein. The mixture is minced. The minced mixture is held at a temperature of from -2°C to -5°C for a period of from 30 minutes to 120 minutes. After forming, the formed pieces are settled for a period of from 10 to 20 seconds by leading them along an elongated conveyor. After dusting, the formed pieces are battered and further settled for a period of not less than 20 seconds prior to flash frying.

## Description

### Introduction

The invention relates to a method for preparing a poultry meat, especially chicken, food product.

UK-A-2269083 describes a method for preparing a chicken food product in which excess crumb is removed from the formed meat pieces prior to delivery into a fryer. This has the considerable advantage of optimising fryer usage and in providing a consistent product.

EP-A-0951843 describes a method for preparing a poultry product in which tempered poultry pieces are flaked and then mixed with protein, water and binding agents. While this system provides poultry products with enhanced physical and organoleptic properties one problem on a commercial is that the rate of possible production is relatively low and the handling of the product is inconvenient.

This invention is therefore directed towards the optimisation of the production of such poultry pieces while not adversely affecting the physical and organoleptic properties of poultry products produced.

### Statements of Invention

According to the invention there is provided a method for preparing a poultry meat product comprising the steps of:-
pretempering a block of frozen poultry pieces to a temperature of from -12°C to -14°C;
tempering the pretempered block of poultry pieces for a minimum period of 24 hours to a temperature of from -8°C to -10°C;
prebreaking the tempered block of poultry pieces into prebroken poultry pieces;
mixing the prebroken poultry pieces with water, protein and a binding agent;
mincing the mixture thus formed to a mixer outlet temperature of from -3°C to -6°C;
holding the minced mixture at a temperature of from -2°C to -5°C for a period of at least 30 minutes;
forming the minced mixture into pieces of desired shape;
settling the formed pieces for a period of at least 10 seconds;
applying a predust to the settled formed pieces;
applying a batter to the predusted formed pieces;
at least partially cooking the predusted battered pieces; and
freezing the cooked pieces.

In a referred embodiment of the invention the temperature of the prebroken poultry pieces prior to mixing is from -4°C to -8°C.

Preferably the formed pieces are settled by leading the formed pieces along a conveyor to a pre-dusting station.

In one embodiment of the invention the method includes the step, after application of batter, of settling the battered pieces for a period of at least 10 seconds prior to cooking. Preferably, the battered pieces are settled for a period of at least 20 seconds prior to cooking.

In a preferred arrangement the battered pieces are settled by leading the battered pieces along a conveyor to a bath of hot cooking oil.

The invention also provides white meat food products whenever prepared by the method of the invention.

### Brief Description of the Drawings

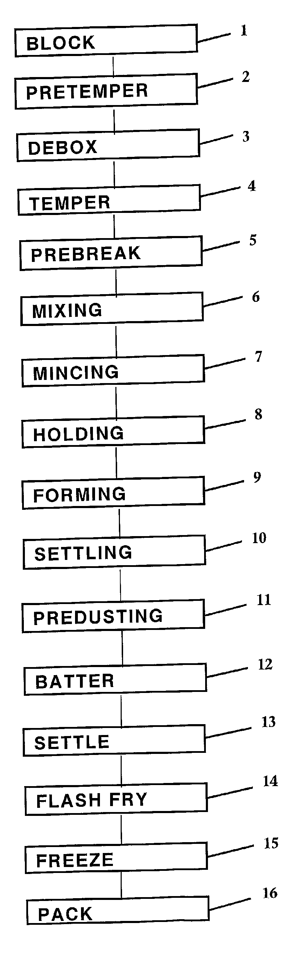

The invention will be more clearly understood from the following description thereof given by way of example only with reference to the accompanying drawing which is a block diagram of the method of the invention.

### Detailed Description

Referring to the drawing, there is illustrated a method for preparing a poultry food product according to the invention. Frozen blocks 1 of poultry meat (typically white chicken meat) wrapped in a suitable plastic in boxes are first pre-tempered 2 in the boxes to a temperature of from -12°C to -14°C for a period of at least 24 hours. The pretempered blocks are then de-boxed 3 and the blocks are arranged on the shelves of a tempering rack to allow for air circulation. The blocks are tempered in step 4 for a minimum period of 24 hours to a temperature of from
-8°C to -10°C.

The tempered blocks are prebroken by rough mincing in step 5, typically through a 10mm extrusion head. The roughly minced poultry pieces have an outlet temperature of from -8°C to -4°C, ideally approximately-6°C, and are collected in tote bins.

The prebroken poultry pieces are delivered from the tote bins into a hopper feed of a mixer, in which they are mixed along with water, phosphate, salt and protein in a mixing/blending step 6. The mixing 6 is carried out for a period of between 1 and 5 minutes, preferably between 2 and 4 minutes, and usually for about 3 minutes. After mixing, the mixture is minced through a 3mm head in a mincing step 7 and the minced mixture is collected in a tote bin. The outlet temperature of the minced mixture is from -3°C to -6°C. The minced mixture is then transferred to a cold room in which the mixture is held 8 at a temperature of from -2°C to -5°C for a period of from 30 minutes to 120 minutes.

After holding 8 the minced mixture is shaped/formed 9 into pieces of desired shape. The pieces may, for example, be formed into shapes such as nuggets, burgers and the like. After forming, the formed pieces are settled in a settling step 10 for a period of at least 10 seconds, typically by leading them along an elongated conveyor 30.

A predust is applied to the settled formed pieces in a pre-dusting step 11. After predusting, batter is applied in one or more stages in a battering step 12. Various other steps such as additional battering, crumb coating etc may also be used, however they are not described in detail as they are not an essential part of this invention. Subsequent to the battering step 12, the battered product are further settled in a settling step 13 for a period of at least 10 seconds and preferably approximately 20 seconds prior to cooking, typically by leading the battered formed pieces along a settling conveyor prior to delivery into a fryer in which the meat pieces are flash fried 14 at a temperature of at least 185°C for a period of not less than 20 seconds. This is a partial cook. After frying 14, the poultry meat pieces are frozen 15, for example, in a spiral freezer prior to packaging 16.

The combination of processing steps prior to and including mincing is of particular importance in optimising rates of production while maintaining excellent characteristics of taste and mouth feel as well as physical properties.

Many variations on the specific embodiments of the invention will be readily apparent and accordingly the invention is not limited to the embodiments hereinbefore described which may be varied in both construction and detail.

## Claims

1. A method for preparing a poultry food product comprising the steps of:-
pretempering a block of frozen poultry pieces to a temperature of from -12°C to -14°C;
tempering the pretempered block of poultry pieces for a minimum period of 24 hours to a temperature of from -8°C to -10°C;
prebreaking the tempered block of poultry pieces into prebroken poultry pieces;
mixing the prebroken poultry pieces with water, protein and a binding agent;
mincing the mixture thus formed to a mixer outlet temperature of from -3°C to -6°C;
holding the minced mixture at a temperature of from -2°C to -5°C for a period of at least 30 minutes;
forming the minced mixture into pieces of desired shape;
settling the formed pieces for a period of at least 10 seconds;
applying a predust to the settled formed pieces;
applying a batter to the predusted formed pieces;
at least partially cooking the predusted battered pieces; and
freezing the cooked pieces.

2. A method as claimed in claim 1 wherein the temperature of the prebroken poultry pieces prior to mixing is from -4°C to -8°C.

3. A method as claimed in claim 2 wherein the temperature of the prebroken poultry pieces is approximately -6°C.

4. A method as claimed in any preceding claim when the tempered block of poultry pieces is prebroken by rough mincing.

5. A method as claimed in any preceding claim wherein the minced mixture is held for a period of from 30 minutes to 120 minutes prior to forming.

6. A method as claimed in any preceding claim wherein the formed pieces are settled by leading the formed pieces along a conveyor to a pre-dusting station.

7. A method as claimed in any preceding claim including the step, after application of batter, of settling the battered pieces for a period of at least 10 seconds prior to cooking.

8. A method as claimed in claim 6 wherein the battered pieces are settled for a period of at least 20 seconds prior to cooking.

9. A method as claimed in claim 7 or 8 wherein the battered pieces are settled by leading the battered pieces along a conveyor to a bath of hot cooking oil.

10. Poultry products whenever prepared by a method as claimed in any preceding claim.
